# EUROPEAN PATENT APPLICATION

(11) **EP 1 936 963 A2**
(43) Date of publication of application: **25.06.2008**
(21) Application number: 07115139.3
(22) Date of filing: 28.08.2007
(51) Int. Cl.: H04N 5/445

(54) **Method and apparatus for displaying broadcast program listings**

(30) Priority: 22.12.2006 KR 20060132803
(71) Applicant: Samsung Electronics Co., Ltd., Suwon-si, Gyeonggi-do 442-743 (KR)
(72) Inventor: Cho, Young, Gyeonggi-do (KR)
(74) Representative: Clark, Charles Robert

(57) **Abstract**

A display apparatus displays broadcast program listings. The display apparatus includes a storage unit which stores Electronic Program Guide (EPG) information, a display unit which displays broadcast program listings using the EPG information, a user interface which receives an input of a command to move, and a control unit which controls the display unit to move to a listing area of the broadcast program listings including valid broadcast information, and displays the listing area, if the command to move is input. As a result, a viewer can select a desired broadcast program with ease and without wasting time.

## Description

Apparatuses and methods consistent with the present invention relate to a display apparatus and a method for displaying broadcast program listings.

In accordance with a recent announcement of the Telecommunications Technology Association (TTA) to adopt the proposed specifications for digital wired broadcast service and digital wired data broadcast service as the standards, digital televisions (TVs) and services are in increasing demand. Digital broadcasts can feature diverse channels. In digital broadcast systems, tens to hundreds of broadcast channels are typically provided to viewers, which are a lot more than those provided by a traditional analog broadcast system. Accordingly, it is necessary to provide the viewers with a program guide so that the viewers can easily check the available programs and their information. The Electronic Program Guide (EPG) provides such service to the viewers.

By the EPG service, details of the broadcast programs are provided through an idle frequency, or through a channel devoted for a specific type of broadcast signal. The EPG service provides EPG information such as TV program listings, on the screen of a digital TV. If a viewer selects a title of a broadcast program, details of the selected program, such as channel number, broadcast time, or synopsis are displayed. A broadcast station may support the EPG service, by transmitting additional data containing the EPG information along with the video and audio data. EPG information may include program genre, title and broadcast time.

The EPG information is generally displayed with reference to a time axis, such that, instead of program title, a message such as 'No data' is displayed, if a broadcast program does not exist at a selected time. A viewer generally checks broadcast programs by scrolling on the EPG screen with reference to the time axis, and because the time axis is divided by a preset time unit such as a one or two hour interval, the viewer has to repeatedly scroll on the EPG screen if 'No data' messages continue, such that inconvenience is experienced and efficient navigation is not provided. The similar inconvenience of having to scroll on the EPG screen several times is experienced, if the viewer is at a broadcast program spanning long hours.

Exemplary embodiments of the present invention aim to overcome the above disadvantages and other disadvantages not described above. Also, the present invention is not required to overcome the disadvantages described above, and an exemplary embodiment of the present invention may not overcome any of the problems described above.

Accordingly, the present invention aims to provide a display apparatus and a method for displaying broadcast program listings, which moves to a certain area of the listings which contains valid broadcast program information and indicates the area such that a viewer can select a desired broadcast program with ease and without wasting time.

According to an aspect of the invention, a display apparatus is provided which includes a storage unit which stores EPG information, a display unit which displays broadcast program listings using the EPG information, a user interface which receives an input of a command to move, and a control unit which controls the display unit to move to a listing area of the broadcast program listings including valid broadcast information, and displays the listing area, if the command to move is input.

According to another aspect of the present invention, there is provided apparatus for displaying broadcast program listings on a display apparatus, comprising: means for displaying the broadcast program listings with reference to a first axis and a second axis, the first axis being based on a broadcast time, and the second axis being based on a broadcast channel, using Electronic Program Guide (EPG) information; means for determining whether or not an input command to move is received; means for moving to a listing area corresponding to a broadcast time including valid broadcast information if the input command directs to move along the first axis; and means for moving to a listing area corresponding to a broadcast channel including valid broadcast information if the input command directs to move along the second axis.

The display unit may construct the broadcast program listings with reference to a first axis and a second axis, and display the constructed broadcast program listings, the first axis being based on a broadcast time, and the second axis being based on a broadcast channel.

The control unit may control the display unit to move to a listing area corresponding to a broadcast time including valid broadcast information in accordance with a command to move along the first axis, and move to a listing area corresponding to a broadcast channel including valid broadcast information in accordance with a command to move along the second axis.

The user interface may receive a selection between a general mode and a valid area display mode, and the control unit may control the display unit to move to a listing area including the valid broadcast information according to the command to move and displays the listing area, if the valid area display mode is selected, and move to a listing area next to the current area according to the command to move and displays the listing area, if the general mode is selected.

The display unit may display a cursor to select a broadcast program from the broadcast program listings, along with the listing area.

A tuner may be additionally provided, and the control unit may control the tuner to tune to a broadcast program on which the cursor is placed, if the cursor stays on the broadcast program for more than a predetermined time period.

The control unit may control the tuner to tune to a broadcast program on which the cursor is placed, in response to a predetermined key input.

According to another aspect of the present invention, a method for displaying broadcast program listings on a display apparatus is provided. The method includes displaying the broadcast program listings with reference to a first axis and a second axis, the first axis being based on a broadcast time, and the second axis being based on a broadcast channel, using EPG information; determining whether or not a command to move is input; and moving to a listing area corresponding to a broadcast time including valid broadcast information in accordance with a command to move along the first axis, and moving to a listing area corresponding to a broadcast channel including valid broadcast information in accordance with a command to move along the second axis.

The method for displaying broadcast program listings on a display apparatus may further comprise receiving a selection between a general mode and a valid area display mode; determining whether the selected mode is the general mode or the valid area display mode; and moving to a listing area including the valid broadcast information according to the command to move and displays the listing area, if the valid area display mode is selected, and moving to a listing area next to the current area according to the command to move and displays the listing area, if the general mode is selected.

The displaying the broadcast program listings may comprise displaying broadcast program listings arranged according to the first axis and the second axis, using the EPG information, along with a cursor to select a broadcast program included in the broadcast program listings.

The method for displaying broadcast program listings on a display apparatus may further comprise tuning to a broadcast program on which the cursor is placed, if the cursor stays on the broadcast program for more than a predetermined time period.

The method for displaying broadcast program listings on a display apparatus may further comprise tuning to a broadcast program on which the cursor is placed, in response to a predetermined key input.

Embodiments of the present invention are now described by way of example and with reference to the accompanying drawings, in which:
Figure 1 is a block diagram illustrating the structure of a display apparatus according to an exemplary embodiment of the present invention;
Figures 2A to 2C illustrate change of location on the program listings displayed on the display apparatus of Figure 1, according to an exemplary embodiment of the present invention;
Figures 3A and 3B illustrate function change of each mode of the keys provided to the display apparatus of Figure 1, according to an exemplary embodiment of the present invention;
Figure 4 is a block diagram illustrating the structure of a display apparatus according to an exemplary embodiment of the present invention;
Figure 5 is a flowchart illustrating a method for displaying broadcast program listings of a display apparatus according to an exemplary embodiment of the present invention; and
Figure 6 is a flowchart illustrating a method for displaying broadcast program listings of a display apparatus according to another exemplary embodiment of the present invention.

Exemplary embodiments of the present invention will now be described in detail with reference to the annexed drawings. In the drawings, the same elements are denoted by the same reference numerals throughout the drawings. In the following description, detailed descriptions of known functions and configurations incorporated herein have been omitted for conciseness and clarity.

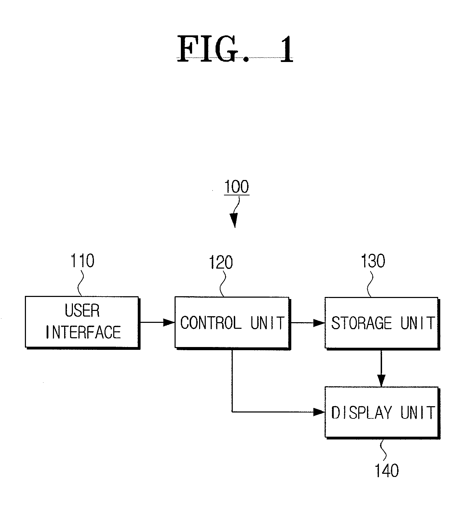

Figure 1 is a block diagram illustrating the structure of a display apparatus according to an exemplary embodiment of the present invention.

Referring to Figure 1, a display apparatus 100 according to an exemplary embodiment of the present invention includes a user interface 110, a control unit 120, a storage unit 130 and a display unit 140.

The display apparatus 100 may be implemented as a settop box or a digital TV, which processes a signal such as an infrared ray received from an external input device such as a remote controller.

A transmitter (not shown) sends out a digital signal being provided from the terrestrial wave broadcast, cable broadcast, or satellite broadcast to the display apparatus 100. The digital signal includes a digital broadcast signal and EPG information of the digital broadcast signal. The EPG information includes broadcast program guide corresponding to the digital broadcast signal.

If the digital broadcast signal is a terrestrial wave broadcast signal, the EPG information may be transmitted at the same frequency as the digital broadcast signal, and if the digital broadcast signal is a cable, or a satellite broadcast, the EPG information may be transmitted at a frequency different from that of the digital broadcast signal.

The user interface 110 receives a command to select or activate a function supported by the display apparatus 100. The user interface 110 may be implemented as an external input device such as a key panel mounted to the main body of the display apparatus 100, or a remote controller. The key panel and the remote controller include a plurality of numeric keys and confirmation key. According to an exemplary embodiment of the present invention, the user interface 110 also includes a direction key to input a request for change of location on the EPG screen. If the user interface 110 is implemented as an external input device such as a remote controller, the user interface 110 may additionally include a light receiving unit at a main body of the display apparatus 100 to receive a manipulation signal being transmitted from the external input device.

The control unit 120 operates to control the overall operation of the display apparatus 100, according to a user command which is input through the user interface 110.

The storage unit 130 operates to store EPG information. That is, the storage unit 130 stores EPG information which is detected by a detecting unit (not shown) from a plurality of digital signals being received by the display apparatus 100 over an antenna. According to related regulations, the EPG information is transmitted using a specific area of video signal packets of the broadcast. Therefore, the EPG information is obtained by detecting and decoding specific information.

The stored EPG information provides the broadcast program listings, and details of broadcast programs which are selected through the user interface 110.

The display unit 140 operates to display broadcast program listings, using the EPG information stored at the storage unit 130. The display unit 140 may be implemented as displays such as a Plasma Display Panel (PDP), or Liquid Crystal Display (LCD).

The display unit 140 may construct broadcast program listings according to a time axis (first axis), and a broadcast channel axis (second axis).

The display unit 140 may display a cursor along with the listings to select a broadcast program from the listings. The cursor may be implemented in a variety of different configurations, such as a highlight, an arrow, or a box.

If a command to change a location on the screen is input through the user interface 110, the control unit 120 controls the display unit 140 to move to the next listing area of the broadcast program listings which includes valid broadcast information, and display the changed area of the listings. Valid broadcast information includes portions of the EPG which comprise a broadcast program listing: it does not include a portion of the EPG where a message such as 'No data' is displayed, if a broadcast program does not exist at a selected time.

That is, if a command is input to move in the direction of the first axis (time axis) on the broadcast program listings displayed on the display unit 140, the control unit 120 may control the display unit 140 to move to a new listing area corresponding to a broadcast time which includes valid broadcast information and display the new listing area.

If a command is input to move in the direction of the second axis (broadcast channel axis) on the broadcast program listings displayed on the display unit 140, the control unit 120 may control the display unit 140 to move to a new listing area corresponding to a broadcast channel which includes valid broadcast information, and display the new listing area.

According to another exemplary embodiment of the present invention, the user interface 110 may select between a general display mode and a valid area display mode as the display mode for broadcast program listings.

If the valid area display mode is selected by the user interface 110, the control unit 120, according to the command of the user, may control the display unit 140 to move to the next listing area including valid broadcast information, and display the next listing area.

If the general area display mode is selected by the user interface 110, according to the command of the user, the control unit 120 may control the display unit 140 to move to a new listing area next to the current listing area and display the new listing area. According to an exemplary embodiment of the present invention, the display mode includes the general mode and the valid area display mode selectable by the user. However, according to an alternative exemplary embodiment, one of the above two display modes is set as a default mode and the other is set to be operated upon selection by the user. In the alternative exemplary embodiment, a devoted key may be used such that the display mode is changed by pressing the key, and changed back to the default mode by pressing the key once again.

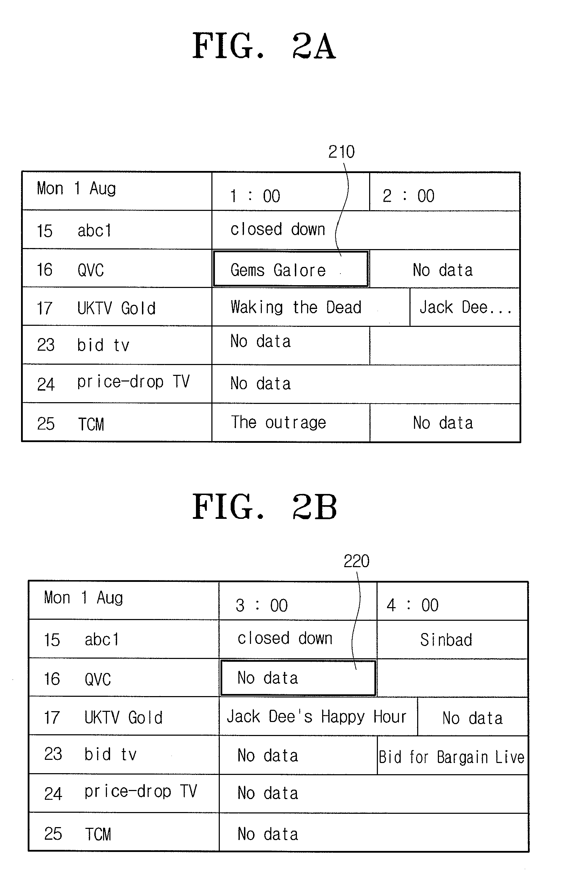

Figures 2A to 2C illustrate change of location on the program listings displayed on the display apparatus of Figure 1, according to an exemplary embodiment of the present invention.

Figure 2A illustrates broadcast program listings currently displayed on the display apparatus 100. Referring to Figure 2A, broadcast program titles between 1:00 - 3:00 are displayed, and the cursor 210 to select a broadcast program is placed on the currently valid broadcast programs, 'Gems Galore' block.

Figure 2B illustrates the next listing area which is displayed as the screen is moved in response to the command by the viewer, and according to the selection of the general mode through the user interface 110. Referring to Figure 2B, broadcast programs between 3:00 - 5:00, which is a preset time ahead, that is, two hours ahead of the current time, are listed according to the command input through the user interface 110. The example illustrated in Figure 2B shows that the cursor 220 is placed on an invalid broadcast program, that is, on message 'No data.'

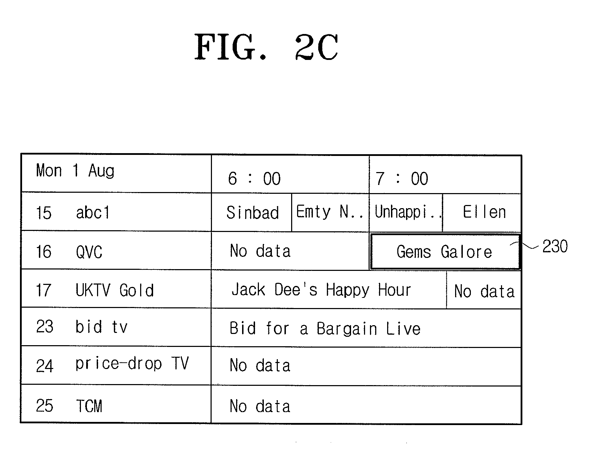

Figure 2C illustrates the next valid listing area, which includes valid broadcast information, displayed as the screen is moved in response to the command to move according to the selection of the valid area display mode. Referring to Figure 2C, the next valid listing area is displayed according to the command of the viewer input through the user interface 110, and includes 'Gems Galore' as the valid broadcast information. Accordingly, instead of moving to the area at the preset time ahead of the current time, the listing information at 6:00 - 7:00 is displayed. The cursor 230 is placed on a 'Gems Galore' block.

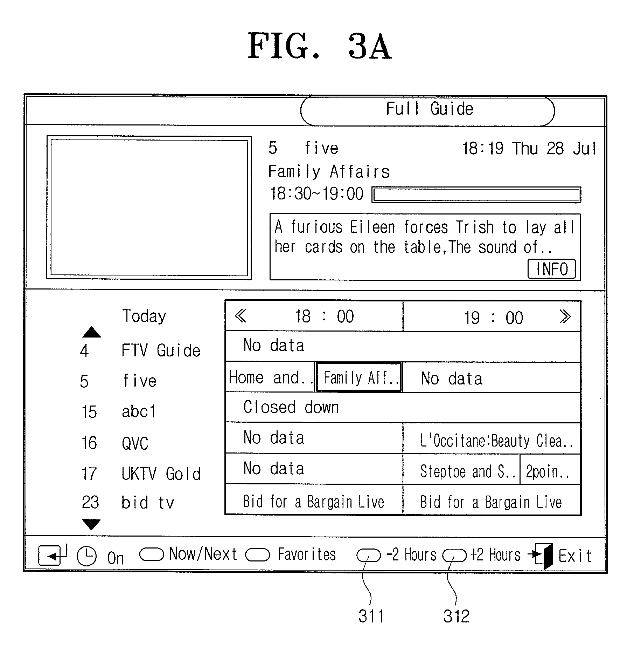

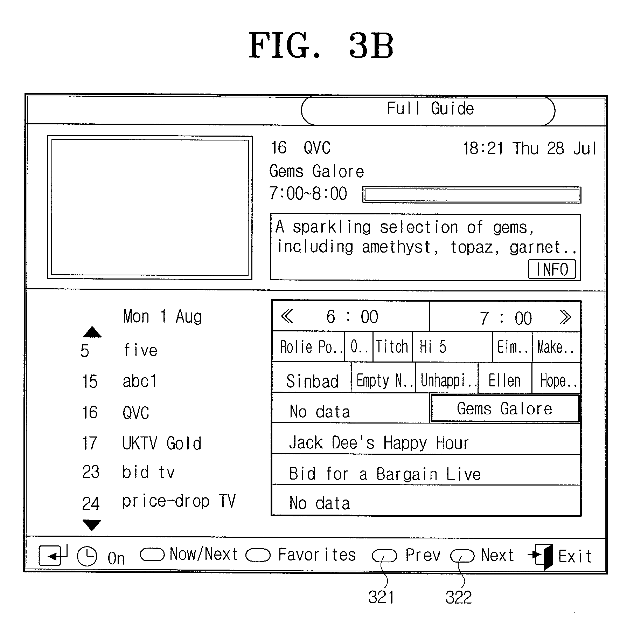

Figures 3A and 3B illustrate function change of each mode of the keys provided to the display apparatus 100 of Figure 1. For convenience of explanation, direction keys of the key panel mounted on the display apparatus 100 will be explained by way of example.

Figure 3A is provided to explain the function of the direction keys 311, 312, when the general mode is selected.

Referring to Figure 3A, the direction keys 311, 312 on the display apparatus 100 may function to shift the broadcast program listings forward or backward at two hour intervals. Although this particular exemplary embodiment sets two hours as the unit of shifting the program listings, one will understand that the time interval may be changed by the viewer.

Figure 3B is provided to explain the function of the direction keys 321, 322, when the valid area display mode is selected.

Referring to Figure 3B, the direction keys 321, 322 on the display apparatus 100 may function to move the broadcast program listings on the screen to the next valid listing area which includes valid broadcast information.

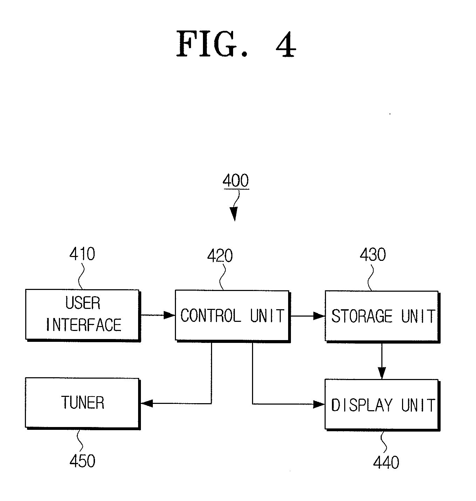

Figure 4 is a block diagram illustrating the construction of a display apparatus according to another exemplary embodiment of the present invention.

Referring to Figure 4, the display apparatus 400 includes a user interface 410, a control unit 420, a storage unit 430, a display unit 440 and a tuner 450. In describing another exemplary embodiment below, the like or same elements as those explained above with reference to Figure 1, will not be explained for the sake of brevity.

The tuner 450 operates to tune to a digital broadcast according to the selection by the viewer from a plurality of digital signals being received by the display apparatus 400 over an antenna.

The control unit 420 may control the tuner 450 to tune to a broadcast program pointed to by the cursor, if the cursor stays on the broadcast program for more than a predetermined time.

Additionally, the control unit 420 may control the tuner 450 to tune to a broadcast program pointed to by the cursor in response to a key input.

The digital broadcast, tuned to by the tuner 450, is output to an audio/video processing unit (not shown). The audio processing unit (not shown) decodes the received audio signal and generates analog type audio data, and the generated audio data is output through a speaker (not shown) so that the viewer can hear it. The video processing unit (not shown) decodes the received video signal and generates displayable video data, and the generated video data is displayed on the display unit 440.

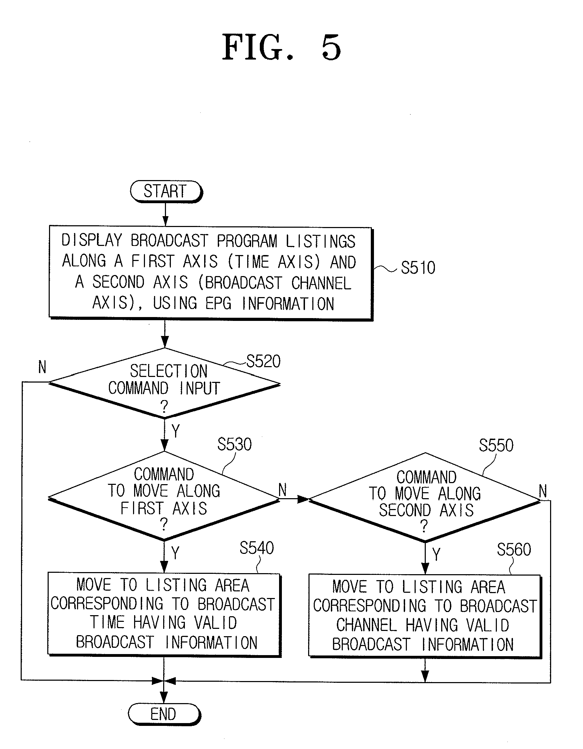

Figure 5 is a flowchart illustrating a method of displaying broadcast listings of a display apparatus according to an exemplary embodiment of the present invention.

Referring to Figure 5, broadcast program listings are displayed along a first axis (broadcast time axis) and a second axis (broadcast channel axis), using the EPG information (S510). A cursor may be displayed on the broadcast program listings for the program selection. It is determined whether or not a user inputs a selection command (S520).

If a selection command is input (S520:Y), it is determined whether or not the input command directs the display unit 140 to move along the first axis (broadcast time axis) (S530).

Upon determination that the input command directs the display unit 140 to move along the first axis (S530:Y), the display unit 140 is moved to a listing area at a broadcast time which has valid broadcast information and displayed (S540).

Upon determination that the input command does not direct the display unit 140 to move along the first axis (S530: N), it is determined whether or not the input command directs the display unit 140 to move along the second axis (broadcast channel axis) (S550).

Upon determination that the input command directs the display unit 140 to move along the second axis (S550:Y), the display unit 140 is moved to a listing area corresponding to a broadcast channel which has valid broadcast information (S560).

If the cursor on the broadcast program listings stays on a broadcast program for more than a predetermined time at operation S510, the broadcast program pointed by the cursor may be tuned. The broadcast program pointed by the cursor may also be tuned in response to a key input.

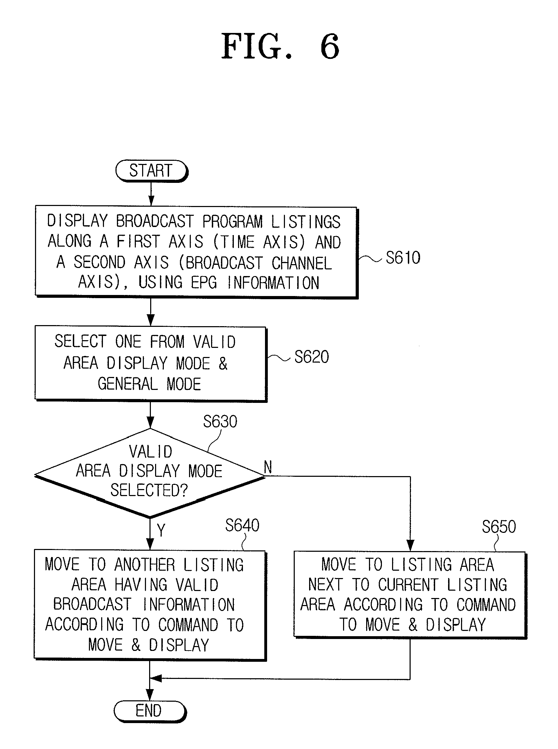

Figure 6 is a flowchart illustrating a method for displaying broadcast program listings of a display apparatus according to an exemplary embodiment of the present invention.

Referring to Figure 6, broadcast program listings are displayed along a first axis (broadcast time axis) and a second axis (broadcast channel axis), using the EPG information (S610). Next, the general mode or the valid area display mode is selected (S620).

If the valid area display mode is selected (S630:Y), the display unit 140 is moved to the next valid listing area having valid broadcast information according to the user command and the next valid listing area is displayed (S640).

If the valid area display mode is not selected (S630:N), that is, if general mode is selected, the display unit 140 may move to a new listing area next to the current listing area according to the user command, and the new listing area is displayed (S650).

The method of operating the display apparatus in accordance with a selected mode between the general mode and the valid area display mode, has been explained above as an exemplary embodiment of the present invention. However, an alternative exemplary embodiment of the present invention is also possible, in which one of the above two display modes is set as a default mode and the other is set to be operated upon selection by the user. In the alternative example, a devoted key may be used such that the display mode is changed by pressing the key, and changed back to the default mode by pressing the key once again.

According to the exemplary embodiments of the present invention, a viewer can select a desired broadcast program on a screen displaying broadcast program listings, with ease and without wasting time.

According to the exemplary embodiments of the present invention, a screen may be moved to the next valid listing area having valid broadcast information, instead of being moved by preset time intervals, according to the user command. Accordingly, the viewer can select a desired broadcast program with convenience and within a reduced amount of time.

The foregoing exemplary embodiments are not to be construed as limiting the present invention. The present teachings can be readily applied to other types of apparatuses. Also, the description of the exemplary embodiments of the present invention is intended to be illustrative, and not to limit the scope of the claims, and many alternatives, modifications, and variations will be apparent to those skilled in the art.

## Claims

1. A display apparatus, comprising:
a storage unit arranged to store Electronic Program Guide (EPG) information;
a display unit arranged to display a broadcast program listing using the EPG information;
a user interface arranged to receive an input command for moving the broadcast program listing displayed by the display unit; and
a control unit arranged to control the display unit so as to move to a listing area of the broadcast program listing that includes valid broadcast information, and displays that listing area, if the input command is received.

2. The display apparatus of claim 1, wherein the display unit is arranged to construct the broadcast program listing with reference to a first axis and a second axis, and displays the constructed broadcast program listing, the first axis being based on a broadcast time, and the second axis being based on a broadcast channel.

3. The display apparatus of claim 2, wherein the control unit is arranged to control the display unit to move to a listing area corresponding to a broadcast time including valid broadcast information if the input command directs to move along the first axis, and
the control unit is arranged to control the display unit to move to a listing area corresponding to a broadcast channel including valid broadcast information if the input command directs to move along the second axis.

4. The display apparatus of an preceding claim, wherein the user interface is arranged to receive a selection between a general mode and a valid area display mode,
the control unit is arranged to control the display unit to move to a first listing area including the valid broadcast information according to the input command and to display the first listing area, if the valid area display mode is selected, and
the control unit is arranged to control the display unit to move to a second listing area next to the current area according to the input command and display the second listing area, if the general mode is selected.

5. The display apparatus of any preceding claim, wherein the display unit is arranged to display a cursor to select a broadcast program from the broadcast program listings, and to select the listing area.

6. The display apparatus of claim 5, further comprising a tuner, wherein the control unit is arranged to control the tuner to tune to a broadcast program on which the cursor is placed, if the cursor stays on the broadcast program for more than a certain time period.

7. The display apparatus of claim 5, further comprising a tuner, wherein the control unit is arranged to control the tuner to tune to a broadcast program on which the cursor is placed, in response to a predetermined key input.

8. A method for displaying broadcast program listings on a display apparatus, comprising:
displaying the broadcast program listings with reference to a first axis and a second axis, the first axis being based on a broadcast time, and the second axis being based on a broadcast channel, using Electronic Program Guide (EPG) information;
determining whether an input command to move is received;
moving to a listing area corresponding to a broadcast time including valid broadcast information if the input command directs to move along the first axis; and
moving to a listing area corresponding to a broadcast channel including valid broadcast information if the input command directs to move along the second axis.

9. The method of claim 8, further comprising:
receiving a selection between a general mode and a valid area display mode;
determining whether the selected mode is the general mode or the valid area display mode;
if the valid area display mode is selected, moving to a first listing area including the valid broadcast information according to the input command and displaying the first listing area; and
if the general mode is selected, moving to a second listing area next to the current area according to the input command and displaying the second listing area,.

10. The method of claim 8 or 9, wherein the displaying the broadcast program listings comprises displaying broadcast program listings arranged according to the first axis and the second axis, using the EPG information, along with a cursor to select a broadcast program included in the broadcast program listings.

11. The method of claim 10, further comprising tuning to a broadcast program on which the cursor is placed, if the cursor stays on the broadcast program for more than a predetermined time period.

12. The method of claim 10, further comprising tuning to a broadcast program on which the cursor is placed, in response to a certain key input.
